# EUROPÄISCHE PATENTANMELDUNG

(11) **EP 1 233 628 A2**
(43) Veröffentlichungstag der Anmeldung: **21.08.2002**
(21) Anmeldenummer: 02100102.9
(22) Anmeldetag: 04.02.2002
(51) Int. Cl.: H04Q 3/00

(54) **Verfahren zum Betrieb eines Kommunikationsnetzes**

(30) Priorität: 20.02.2001 DE 10108052
(71) Anmelder: SIEMENS AKTIENGESELLSCHAFT, 80333 München (DE)
(72) Erfinder: Angermayr, Manfred, 81371 München (DE)

(57) **Zusammenfassung**

Verfahren zum Betrieb eines Kommunikationsnetzes mit einer Mehrzahl von Knoten (A, B, C, X) nach dem ITU-Standard Q704, wobei beim Neustart des Message Transfer Part eines Knotens die protokollgemäße MTP-Restart-Prozedur durch diesen Knoten nur mit denjenigen Nachbarknoten initiiert wird, in denen die MTP-Restart-Prozedur implementiert ist.

## Beschreibung

Die Erfindung betrifft ein Verfahren zum Betrieb eines Kommunikationsnetzes mit einer Mehrzahl von Knoten nach dem ITU-Standard Q704.

Die Signalisierung zwischen Vermittlungsstellen für den Aufund Abbau von Nutzdatenverbindungen und zur Steuerung von Diensten in einem ISDN-Telekommunikationsnetz erfolgt auf der Grundlage des durch die International Telecommunication Union (ITU) festgelegten ITU-T-Zeichengabesystems Nr. 7. Dieses stellt die international eingeführte Basis für den Austausch von Signalisierungsnachrichten zwischen digitalen Vermittlungsstellen dar. Die Signalisierung wird im Signalisierungsverfahren Nr. 7 in getrennten 64 kbit/s-Kanälen geführt, die wie Nutzkanäle behandelt werden können. Sie können also durch die Koppelnetze vermittelt werden.

Bei Unterbrechung einer Verbindung zwischen zwei Vermittlungsstellen oder bei Inbetriebnahme einer neuen Vermittlungsstelle bzw. eines neuen Knotens in dem Telekommunikationsnetz ist dessen Message Transfer Part (MTP) neu zu starten, um den entsprechenden Knoten (wieder) in den Nutzdatenverkehr einzuschleifen.

Im ITU-Standard Q704 ist ein spezieller Kommunikationsablauf zum Schutz eines Knotens eines Kommunikationsnetzes definiert, dessen MTP neu startet bzw. sich gerade im Anlauf befindet - die MTP-Restart-Prozedur. Mit der protokollgemäßen Prozedur wird dem anlaufenden MTP genügend Zeit zur ausreichenden Aktivierung von Links und zum Austausch von Routing-Informationen mit den Nachbarbereichen des Netzes - den Nachbarknoten - zur Verfügung gestellt. Der Abschluß dieser Prozedur wird durch Aussenden einer festgelegten Nachricht, der "Traffic-Restart-Allowed"-Nachricht, an die jeweiligen Nachbarknoten signalisiert.

Die protokollgemäße Prozedur beruht auf der Voraussetzung, daß alle Knoten im Netz sie "beherrschen", d. h. daß sie in allen Knoten des Netzes implementiert ist. Kommunikationsnetze sind jedoch bekanntermaßen in der Praxis normalerweise aus Teilen und Abschnitten unterschiedlichen Alters und damit auch unterschiedlichen Implementierungsstandards zusammengesetzt. In praktisch realisierten Kommunikationsnetzen ist also vielfach in Teilbereichen die MTP-Restart-Prozedur nicht implementiert, d. h. die im Standard getroffene Annahme nicht erfüllt.

Würde man die MTP-Restart-Prozedur in einem Knoten beim Anlauf von dessen MTP dennoch aktivieren, so würde sich die Zeitdauer, bis der MTP für den Nachrichtentransport bereit ist, aufgrund der folgenden Umstände erheblich verlängern:

Beim Anlaufen des eigenen MTP (auch bezeichnet als "Own Point Restart") hat der MTP gemäß dem Q704-Timer T18 ca. 30 s auf die "Traffic-Restart-Allowed"-Nachricht aller seiner Nachbarn zu warten, bevor er seine eigene Routing-Information, abgeschlossen mit seiner eigenen "Traffic-Restart-Allowed"-Nachricht, aussendet und anschließend den Nutzdatenverkehr startet. Der Nachbar eines neu startenden Knotens sendet seine Routing-Information, abgeschlossen durch seine "Traffic-Restart-Allowed"-Nachricht ab und wartet dann gemäß dem Q704-Timer T21 ca. 60 s auf die "Traffic-Restart-Allowed"-Nachricht der Gegenseite, bevor der Verkehr gestartet wird. (Dieser Vorgang wird als "Adjacint Point Restart" bezeichnet.) Je nachdem, ob der eigene MTP oder derjenige eines Nachbarknotens neu startet, ist also im Standard eine Wartezeit von 30 bzw. 60 s vor der Aufnahme des Nutzdatenverkehrs im Zusammenhang mit der MTP-Restart-Prozedur vorgesehen.

Es versteht sich, daß ein Knoten eines Kommunikationsnetzes, in dem diese Prozedur nicht implementiert ist, in keinem Fall die seitens der Nachbarknoten erwartete protokollgemäße Nachricht absenden kann. Die jeweiligen Nachbarknoten warten also die erwähnten Zeitspannen, ohne daß überhaupt eine Nachricht empfangen werden könnte. Dies verlängert unnötigerweise die Systemausfallzeiten. Aus diesem Grunde wurde in der bisherigen Praxis des ITU-Standards Q704 in existierenden Kommunikationsnetzen die MTP-Restart-Prozedur nur dann aktiviert, wenn sie bekanntermaßen in allen Knoten des Netzes implementiert war.

Dieser Ausweg ist allerdings unvorteilhaft, denn die MTP-Restart-Prozedur gewährleistet in einfacher und zweckmäßiger Weise eine Synchronisierung des Betriebs von miteinander zusammenwirkenden Vermittlungsstellen vor der Aufnahme des eigentlichen Nutzdatenverkehrs. Wird auf sie verzichtet, zeigt sich erst nach Aufnahme des Nutzdatenverkehrs, wenn ein Knoten sich in einer Neustart- bzw. Hochlaufphase befunden hat und noch nicht verkehrsbereit war, und der entsprechende Teil des Verkehrs muß nach Beendigung der Anlaufphase dieses Knotens wiederholt werden.

Der Erfindung liegt daher die Aufgabe zugrunde, ein verbessertes Verfahren der gattungsgemäßen Art anzugeben, welches einen effizienten Netzbetrieb ohne unnötig lange Systemausfallzeiten bei weitestgehender Nutzung der Vorteile der MTP-Restart-Prozedur ermöglicht.

Diese Aufgabe wird durch ein Verfahren mit den Merkmalen des Anspruchs 1 gelöst.

Die Erfindung schließt den grundlegenden Gedanken ein, beim Neustart des Message Transfer Part eines Netzknotens die protokollgemäße MTP-Restart-Prozedur nur mit denjenigen Nachbarknoten zu initiieren und auszuführen, die sie "beherrschen". Weiter schließt die Erfindung den Gedanken ein, eine entsprechende Information hinsichtlich der Implementierung dieser Prozedur in den jeweiligen Nachbarknoten im Netz zu speichern. Dies ermöglicht einen selbsttätigen Netzbetrieb in den entsprechenden Anlaufphasen ohne spezielle externe Steuervorgänge oder interne Kommunikationsvorgänge zur Erfassung des Implementierungsstandards der einzelnen Knoten.

In einer bevorzugten Ausführung wird die relevante Information in einer Datenbasis jedes Knotens für jeden Nachbarknoten gespeichert. Speziell wird in der Datenbasis für jedes einen Nachbarknoten eindeutig identifizierende Linkset ein die Implementierung oder Nicht-Implementierung der MTP-Restart-Prozedur im jeweiligen Knoten kennzeichnendes Attribut abgelegt.

In einer anderen Ausführung des vorgeschlagenen Verfahren und Systems wird diese Information in einer zentralen Datenbasis für sämtliche Knoten des Kommunikationsnetzes - oder jedenfalls eines größeren Abschnittes desselben - gespeichert.

Aufgrund dieser Information kann der Nutzdatenverkehr mit denjenigen Nachbarknoten, die nicht zur Ausführung der MTP-Restart-Prozedur ausgebildet sind, im wesentlichen unmittelbar nach Aktivierung der Links des entsprechenden Linkset aufgenommen werden. In der Praxis kann die Aufnahme des Verkehrs spätestens direkt nach Empfang von "Traffic-Restart-Allowed"-Nachrichten derjenigen Nachbarknoten erfolgen, in denen die MTP-Restart-Prozedur implementiert ist und die also zur Aussendung einer solchen Nachricht fähig sind.

Andererseits können beim Neustart des MTP eines Knotens, welcher selbst nicht zur Ausführung der MTP-Restart-Prozedur ausgebildet ist, die Nachbarknoten den Nutzdatenverkehr im wesentlichen unmittelbar durch Aktivierung der Links ihres entsprechenden Linkset aufnehmen - insbesondere also sofort nach Absendung ihrer mit der "Traffic-Restart-Allowed"-Nachricht abgeschlossenen Routing-Information an den startenden Knoten. Die Einhaltung einer Wartezeit gegenüber diesem Knoten kann also eingespart werden.

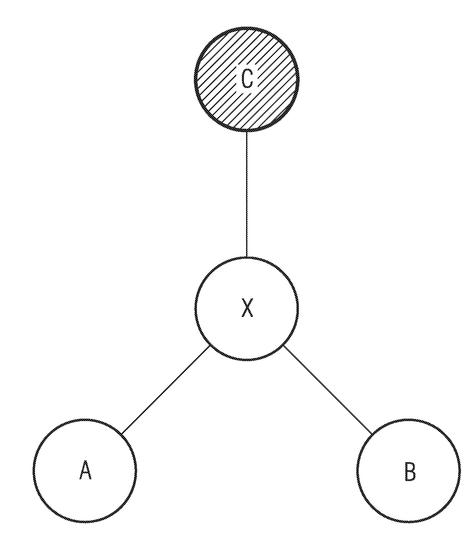

Vorteile und Zweckmäßigkeiten der Erfindung ergeben sich im übrigen aus den Unteransprüchen sowie der nachfolgenden, skizzenartigen Beschreibung eines Ausführungsbeispiels anhand der einzigen Figur.

Diese zeigt - grob schematisch - einen Abschnitt eines kurz als "MTP-Netz" zu bezeichnenden Kommunikationsnetzes, in dem sich die Erfindung anwenden läßt, nämlich vier Knoten A, B, C und X und ihre Verbindungen untereinander. Es wird angenommen, daß in den Knoten A und B die MTP-Restart-Prozedur implementiert ist, im Knoten C aber nicht. Im Knoten X wird das erfindungsgemäße Verfahren eingesetzt, dieser ist also derart konfiguriert, daß der MTP-Restart für die Nachbarknoten A und B aktiviert, für den Nachbarknoten C hingegen deaktiviert ist. Zur Erläuterung der Erfindung werden nachfolgend drei verschiedene Betriebszustände angenommen und die verfahrensgemäßen Abläufe angegeben:

Im ersten Beispiel wird angenommen, der Knoten X befinde sich im Neustart bzw. Anlauf seines MTP. Nachdem die Links zu A, B und C aktiviert sind, wartet Knoten X solange - maximal jedoch die protokollgemäße Zeitspanne T18 = 30 s - bis die Nachbarknoten A und B ihre Routing-Information an ihn übermittelt und mit der "Traffic-Restart-Allowed"-Nachricht (TRA) signalisiert haben, daß sie die Übertragung der Routing-Information beendet haben. Knoten X wartet deshalb nur auf die TRA von A und B, da in einer entsprechenden Datenbasis für das diese beide Knoten definierende Linkset ein die Implementierung der MTP-Restart-Prozedur repräsentierendes Attribut abgelegt ist.

In dem den Knoten C repräsentierendes Linkset ist jedoch ein die Nicht-Implementierung der MTP-Restart-Prozedur repräsentierendes Attribut abgelegt. Knoten X wartet also nicht auf eine TRA vom Knoten C, da aufgrund der in der Datenbasis gespeicherten Information klar ist, daß eine solche nicht zu erwarten ist. Der Knoten X kann also sofort, nachdem A und B ihre TRA übermittelt haben, seinerseits eine Routing-Information, abgeschlossen durch seine eigene TRA, aussenden und mit dem Verkehr beginnen.

In einem zweiten Beispiel sei angenommen, daß sich der Knoten A im Neustart bzw. Anlauf befindet. Nachdem die Links zum Knoten A aktiviert sind, sendet der Knoten X seine Routing-Information, abgeschlossen mit einer TRA, zum Knoten A. Da in der Konfiguration des Knotens X der MTP-Restart bezüglich des Knotens A aktiviert ist, wartet X mit der Aufnahme des Datenverkehrs solange - maximal jedoch T21 = 60 s -, bis Knoten A seinerseits durch Übermittlung seiner TRA seine Bereitschaft zur Aufnahme des Verkehrs signalisiert.

Im dritten Beispiel wird angenommen, daß sich Knoten C im Neustart bzw. Anlauf befindet. Nachdem die Links zum Knoten C aktiviert sind, sendet Knoten X seine Routing-Information, abgeschlossen mit einer TRA, an Knoten C. Da gemäß der Konfiguration des Knotens X der MTP-Restart bezüglich des Knotens C deaktiviert ist, nimmt Knoten X danach sofort den Datenverkehr zum Knoten C auf. Das entsprechende Attribut in dem den Knoten C spezifizierenden Linkset gibt hier an, daß der Knoten C den MTP-Restart nicht beherrscht und daher keine TRA absenden kann.

## Patentansprüche

1. Verfahren zum Betrieb eines Kommunikationsnetzes mit einer Mehrzahl von Knoten (A, B, C, X) nach dem ITU-Standard Q704,
**dadurch gekennzeichnet, daß**
beim Neustart des Message Transfer Part eines Knotens die protokollgemäße MTP-Restart-Prozedur durch diesen Knoten nur mit denjenigen Nachbarknoten initiiert wird, in denen die MTP-Restart-Prozedur implementiert ist.

2. Verfahren nach Anspruch 1,
**dadurch gekennzeichnet, daß**
in einer Datenbasis jedes Knotens (A, B, C, X) für jedes einen Nachbarknoten identifizierenden Linkset ein die Implementierung oder Nicht-Implementierung der MTP-Prozedur im jeweiligen Knoten kennzeichnendes Attribut abgelegt wird.

3. Verfahren nach Anspruch 1,
**dadurch gekennzeichnet, daß**
in einer zentralen Datenbasis für sämtliche Knoten des Kommunikationsnetzes oder eines Abschnittes desselben ein die Implementierung oder Nicht-Implementierung der MTP-Prozedur im jeweiligen Knoten kennzeichnendes Attribut abgelegt wird.

4. Verfahren nach einem der vorangehenden Ansprüche,
**dadurch gekennzeichnet, daß**
der Kommunikationsverkehr mit denjenigen Nachbarknoten (C), in denen die MTP-Restart-Prozedur nicht implementiert ist, im wesentlichen unmittelbar nach Aktivierung der Links des entsprechenden Linkset, insbesondere spätestens nach Empfang von "Traffic-Restart-Allowed"-Nachrichten von den übrigen Nachbarknoten (X) aufgenommen wird.

5. Verfahren nach einem der vorangehenden Ansprüche,
**dadurch gekennzeichnet, daß**
beim Neustart des Message Transfer Part eines Knotens (C), welcher selbst nicht zur Ausführung der MTP-Restart-Prozedur ausgebildet ist, die Nachbarknoten (X) den Kommunikationsverkehr zu diesem Knoten im wesentlichen unmittelbar nach Aktivierung der Links des entsprechenden Linkset, insbesondere sofort nach Absendung einer mit der "Traffic-Restart-Allowed"-Nachricht abgeschlossenen Routing-Information an den startenden Knoten, aufgenommen wird.
